# EUROPEAN PATENT SPECIFICATION

(11) **EP 4 169 972 B1**
(45) Date of publication and mention of the grant of the patent: **23.09.2026**
(21) Application number: 21903813.0
(22) Date of filing: 07.12.2021
(51) Int. Cl.: C08J 3/24, C08J 3/12, C08J 3/075, C08K 5/092, C08K 5/098

(54) **PREPARATION METHOD OF SUPER ABSORBENT POLYMER**
VERFAHREN ZUR HERSTELLUNG EINES SUPERABSORBIERENDEN POLYMERS
PROCÉDÉ PERMETTANT DE PRÉPARER UN POLYMÈRE SUPERABSORBANT

(30) Priority: 07.12.2020 KR 20200169708; 06.12.2021 KR 20210173196
(43) Date of publication of application: 26.04.2023
(73) Proprietor: LG Chem, Ltd., Seoul 07336 (KR)
(72) Inventor: MIN, Yoon Jae, Daejeon 34122 (KR); KIM, Gicheul, Daejeon 34122 (KR); KIM, Tae Yun, Daejeon 34122 (KR); LEE, Jungmin, Daejeon 34122 (KR); CHOI, Jae Hoon, Daejeon 34122 (KR)
(74) Representative: Goddar, Heinz J.
(86) International application number: PCT/KR2021/018473
(87) International publication number: WO 2022/124767

(56) References cited:
- EP-A1- 2 527 391
- EP-A1- 3 067 370
- WO-A1-2011/025013
- WO-A1-2011/126079
- WO-A1-2011/136301
- WO-A1-97/38740
- JP-A- H11 240 914
- US-A1- 2008 214 749
- US-A1- 2008 234 420

## Description

### [TECHNICAL FIELD]

This invention relates to a method for preparing superabsorbent polymer. More specifically, this invention relates to a method for preparing superabsorbent polymer that realizes excellent drying efficiency, and thus, effectively inhibits warping of resin.

### [BACKGROUND]

Super absorbent polymer (SAP) is synthetic polymer material that can absorb moisture of 500 to 1000 times of self-weight, and is also named differently as super absorbency material (SAM), absorbent gel material (AGM), etc. according to developing companies. The superabsorbent polymer began to be commercialized as sanitary items, and currently, it is being widely used as water-holding material for soil, water stop material for civil engineering and architecture, sheets for raising seedling, freshness preservatives in the field of food circulation, fomentation material, and the like.

Such superabsorbent polymer is mainly used in the field of hygienic goods such as diapers, sanitary pads, and the like. In general, in the hygienic goods, the superabsorbent polymer is included while being dispersed in pulp. However, recently, there are continued attempts to provide hygienic goods such as diapers with thinner thickness, and as a part of them, development of hygienic goods having reduced pulp content, or pulpless hygienic goods are being actively progressed.

As such, in the case of hygienic goods having reduced pulp content or pulpless hygienic goods, superabsorbent polymer is included at relatively high rate, and thus, superabsorbent polymer particles are inevitably included in multilayers in the hygienic goods. The superabsorbent polymer should exhibit rapid absorption speed as well as high absorption capacity, so that the whole superabsorbent polymer particles included in multilayers may efficiently absorb a large quantity of liquid such as urine.

Meanwhile, such superabsorbent polymer is generally prepared through the steps of polymerizing monomers to prepare hydrogel polymer containing a large quantity of moisture, and drying such hydrogel polymer and grinding it to resin particles having desired particle diameters. However, in case a grinding process is conducted after drying hydrogel polymer as described above, a large quantity of fines may be generated to deteriorate the properties of the finally prepared superabsorbent polymer.

And, in order to reuse such fines, commonly, fines are mixed with water and agglomerated to prepare fines reassembly, and then, fines reassembly prepared by drying/grinding/classification processes is introduced. However, due to water used, energy consumption increases during the drying process, and device load increases, thus lowering productivity of superabsorbent polymer.

And, hydrogel polymer polymerized during the preparation process of superabsorbent polymer are agglomerated with each other, and in case the hydrogel polymer is prepared as agglomerated particles, cohesive force may increase, and thus, drying may not be sufficiently achieved in the subsequent drying process. Specifically, the drying process is commonly conducted by applying hot air in a belt dryer equipped with perforated plates, but due to increase in cohesive force of hydrogel polymer, porosity in a dried layer may significantly decrease, and thus, hot air differential pressure may increase, warping may be generated at the edge of a dried product, and it may be difficult to dry a large quantity.

Namely, in case un-drying rate increases or warping of a dried body is generated, it may be difficult to realize desired properties of products and defects may be caused, and thus, there is a continued demand for development of technology capable of increasing drying efficiency without such problems.

US 2008 /214 749 A1 relates to a process for producing a water-absorbing polymer by polymerizing a monomer solution and drying the resulting hydrogel by means of a heated gas stream comprising effecting the drying in two or more temperature zones, and/or the gas stream is being flowed against the hydrogel upwardly in the upstream sector of the belt dryer and downwardly in the downstream sector of the belt dryer, the direction of flow being reversed at a water content of 15% to 45% by weight for the hydrogel, and/or the hydrogel layer is flowed against in a belt dryer upwardly to some extent at least, the gas velocity being 5% to 30% of the gas velocity required to lift the hydrogel off the belt; and also an apparatus for carrying out the process and use of the water-absorbing polymers produced by the process to produce hygiene articles.

EP 2 527 391 A1 describes a method for producing a water absorbent resin by drying a particulate hydrogel having a high solid content concentration of 45% by weight or more, a method for efficient drying water absorbent resin. In more detail, the method for producing a water absorbent resin, comprises a polymerization step to polymerize an unsaturated monomer, and; a drying step to dry a particulate hydrogel crosslinked polymer, which is obtained by micronization of a hydrogel polymer during or after the polymerization and which has a solid content concentration of 45% by weight or more, wherein an amount of a peroxide in the particulate hydrogel crosslinked polymer to be dried in the drying step is 1 to 100 ppm relative to the weight of the solid content of the particulate hydrogel crosslinked polymer, and a drying temperature of the particulate hydrogel crosslinked polymer in the drying step is 160 °C or more.

### [DETAILED DESCRIPTION OF THE INVENTION]

### [Technical Problem]

Thus, it is an object of the invention to provide a method for preparing superabsorbent polymer that can easily control a particle diameter to a desired range without generation of a large quantity of fines, and exhibits excellent drying efficiency, and thus, can effectively inhibit warping of a dried product even if dry amount increases, and thereby, can improve the properties of the finally prepared superabsorbent polymer, by finely cutting polymerized hydrogel polymer using specific additive and then drying the same under specific conditions,

### [Technical Solution]

In order to achieve the object, there is provided herein a method for preparing superabsorbent polymer comprising steps of:
conducting crosslinking polymerization of water soluble ethylenically unsaturated monomers having acid groups of which at least a part are neutralized, in the presence of an internal crosslinking agent and a polymerization initiator, to form hydrogel polymer;
mixing a carboxylic acid-based additive with the hydrogel polymer, and then, finely cutting, to prepare a mixture comprising finely cut hydrogel polymer; and
drying the mixture while alternately introducing up-flow air of 120 °C to 210 °C and down-flow air of 120 °C to 210 °C to the mixture, to form base resin powder,
wherein the total introduction time of down-flow air is longer than the total introduction time of up-flow air, and
wherein the carboxylic acid-based additive is one or more selected from carboxylic acid represented by the Chemical Formula 1 and metal salts thereof:

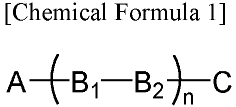

In the Chemical Formula 1,
A is C5 to 21 alkyl,
B₁ is -OCO-, -COO-, or -COOCH(R₁)COO-,
B₂ is -CH₂-, -CH₂CH₂-, -CH(R₂)-, -CH=CH-, or -C≡C-,
wherein, R₁ and R₂ are each independently, C1 to 4 alkyl, and
n is an integer of 1 to 3, and
C is a carboxylic group.

### [ADVANTAGEOUS EFFECTS]

According to the preparation method of superabsorbent polymer of the invention, by mixing polymerized hydrogel polymer with carboxylic acid-based additive and then finely cutting, the particle diameter can be controlled to a desired range without agglomeration between hydrogel polymer particles, and thus, grinding processes of coarse grinding and fine grinding continued after a drying process can be simplified, thereby remarkably decreasing generation of fines during the process. And, by controlling drying conditions after fine cutting, excellent drying efficiency may be exhibited, and thus, even if the amount of drying increases, warping of a dried product can be effectively inhibited. Finally, superabsorbent polymer prepared thereby can realize excellent properties.

### [BRIEF DESCRIPTION OF DRAWING]

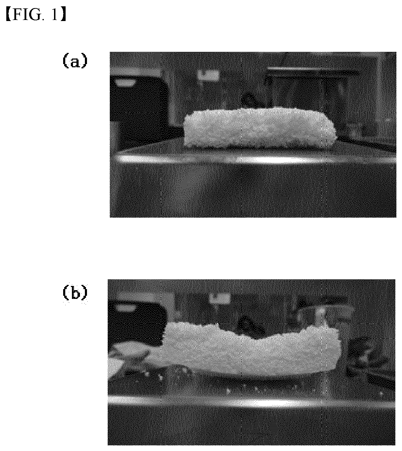

Fig. 1 shows the photographs of the cross-sections of dried products prepared according to Example and Comparative Example of the invention.

### [DETAILED DESCRIPTION OF THE EMBODIMENTS]

A singular expression includes a plural expression thereof, unless it is expressly stated or obvious from the context that such is not intended. As used herein, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

The terms "first", "second", and "third" are used to explain various constructional elements, and these terms are used only to distinguish one construction element from the other constructional elements.

As used herein, the term "polymer" means a polymerized state of water soluble ethylenically unsaturated monomers, and it may include those of all moisture content ranges or particle diameter ranges. Among the polymers, those after polymerized and before dried, and having a moisture content of about 40 wt% or more may be referred to as hydrogel polymer, and particles obtained by grinding and drying of such hydrogel polymer may be referred to as crosslinked polymer.

And, the term "superabsorbent polymer powder" means particulate matter comprising a crosslinked polymer wherein water soluble ethylenically unsaturated monomers having acid groups, of which at least a part are neutralized, are polymerized and crosslinked by an internal crosslinking agent.

And, the term "superabsorbent polymer" means a crosslinked polymer wherein water soluble ethylenically unsaturated monomers having acid groups, of which at least a part are neutralized, are polymerized, or base resin powder consisting of superabsorbent polymer particles obtained by grinding of the crosslinked polymer, or is used to include the crosslinked polymer or base resin made appropriate for productization through additional process, for example, surface crosslinking, fines reassembly, drying, grinding, and classification.

And, the term "crosslinked polymer" means those obtained by crosslinking of the water soluble ethylenically unsaturated monomers in the presence of an internal crosslinking agent, and the "base resin powder" means material comprising such a crosslinked polymer.

A method for preparing superabsorbent polymer according to one embodiment of the invention comprises steps of: conducting crosslinking polymerization of water soluble ethylenically unsaturated monomers having acid groups of which at least a part are neutralized, in the presence of an internal crosslinking agent and a polymerization initiator, to form hydrogel polymer; mixing carboxylic acid-based additive with the hydrogel polymer, and then, finely cutting, to prepare a mixture comprising finely cut hydrogel polymer; and drying the mixture while alternately introducing up-flow air of 120 °C to 210 °C and down-flow air of 120 °C to 210 °C to the mixture, to form base resin powder, wherein the total introduction time of down-flow air is longer than the total introduction time of up-flow air, and
wherein the carboxylic acid-based additive is one or more selected from carboxylic acid represented by the Chemical Formula 1 and metal salts thereof:

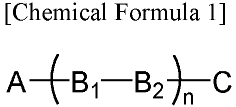

In the Chemical Formula 1,
A is C5 to 21 alkyl,
B₁ is -OCO-, -COO-, or -COOCH(R₁)COO-,
B₂ is -CH₂-, -CH₂CH₂-, -CH(R₂)-, -CH=CH-, or -C≡C-,
wherein, R₁ and R₂ are each independently, C1 to 4 alkyl, and
n is an integer of 1 to 3, and
C is a carboxylic group.

In order to prepare superabsorbent polymer particles having desired particle size during the preparation process of superabsorbent polymer, processes of grinding(or finely cutting) polymerized hydrogel polymer, and drying the same are conducted, but in case hydrogel polymer is prepared as particles, cohesive force may increase, and drying may not be properly achieved in the subsequent drying process, and energy consumption of the drying process may increase. And, reagglomeration may be generated, and thus, in order to realize desired particle size, processes of coarse grinding and fine grinding are required for a long time after the drying process, and due to the additional grinding processes, the amount of fines generated significantly increases.

Specifically, the drying process is commonly conducted by applying hot air in a belt dryer equipped with perforated plate, but due to increase in cohesive force of hydrogel polymer, porosity in a dry layer may significantly decrease, and thus, hot air differential pressure may increase, and warping may be generated at the edge of a dried product. And, in case dry amount increases, the inside of a dried product may not be sufficiently dried, and thus, drying efficiency may be remarkably lowered.

Thus, the inventors found out that by finely cutting hydrogel polymer in the presence of specific carboxylic acid-based additive, the particle diameter may be controlled to a desired range without agglomeration between hydrogel particles, and thus, a process of additional grinding for a long time after drying becomes unnecessary, thereby remarkably decreasing fines generation. And, they also found out that by drying the finely cut mixture having lowered cohesive force due to mixing with the additives under specific conditions, excellent drying efficiency may be realized, and thus, even if dry amount increases, warping of a dried product may be effectively inhibited, and completed the invention.

Meanwhile, the carboxylic acid-based additive simultaneously has hydrophobic functional group and hydrophilic functional group. Since water soluble ethylenically unsaturated monomers comprise acid groups(-COOH) and/or neutralized acid groups(-COO), hydrophilic parts due to the acid groups(-COOH) and/or neutralized acid groups(-COO) that do not participate in polymerization and remain, exist in a large quantity, on the surface of hydrogel polymer prepared by polymerization. Thus, in case the hydrogel polymer is mixed with the additives, the hydrophilic functional groups of the additives are adsorbed to at least a part of the hydrophilic parts existing on the surface of hydrogel polymer, and the polymer surface to which the additives are adsorbed exhibits hydrophobicity due to the hydrophobic functional groups positioned at the other end of the additives. Thus, agglomeration of resin particles may be inhibited.

Hereinafter, the preparation method will be explained in detail according to each step.

### (Polymerization step)

The method for preparing superabsorbent polymer according to one embodiment of the invention comprises a step of conducting crosslinking polymerization of water soluble ethylenically unsaturated monomers having acid groups of which at least a part are neutralized, in the presence of an internal crosslinking agent and a polymerization initiator, to form hydrogel polymer.

Specifically, in this step, a monomer composition comprising a monomer mixture and a polymerization initiator is subjected to thermal polymerization or photopolymerization in the presence of an internal crosslinking agent to form hydrogel polymer.

The water soluble ethylenically unsaturated monomers may be any monomers commonly used in the preparation of superabsorbent polymer. As non-limiting examples, the water soluble ethylenically unsaturated monomer may be a compound represented by the following Chemical Formula 2:

[Chemical Formula 2] R₁-COOM¹

In the Chemical Formula 2,
R₁ is a C2-5 alkyl group comprising an unsaturated bond,
M¹ is a hydrogen atom, a monovalent or divalent metal, an ammonium group or an organic amine salt.

Preferably, the monomers may be one or more selected from the group consisting of acrylic acid, methacrylic acid, and monovalent metal salts, divalent metal salts, ammonium salts and organic amine salts thereof. It is favorable that acrylic acid or a salt thereof is used as the water soluble ethylenically unsaturated monomer, because superabsorbent polymer with improved absorption property can be obtained. In addition, as the monomers, one or more selected from the group consisting of anionic monomers and salts thereof, such as maleic anhydride, fumaric acid, crotonic acid, itaconic acid, 2-acryloylethane sulfonic acid, 2-methacryloylethane sulfonic acid, 2-(meth)acryloylpropane sulfonic acid or 2-(meth)acrylamide-2-methylpropane sulfonic acid; non-ionic hydrophilic group-containing monomers, such as (meth)acrylamide, N-substituted (meth)acrylate, 2-hydroxyethyl (meth)acrylate, 2-hydroxypropyl (meth)acrylate, methoxy polyethylene glycol (meth)acrylate or polyethylene glycol (meth)acrylate; amino group-containing unsaturated monomers and quaternized products thereof, such as (N,N)-dimethylaminoethyl (meth)acrylate or (N,N)-dimethylaminopropyl (meth)acrylamide, may be used.

Wherein, the water soluble ethylenically unsaturated monomers have acid groups, and at least a part of the acid groups are partially neutralized using the neutralizing solution of the invention.

Wherein, the degree of neutralization of monomers may be 40 to 95 mol%, or 40 to 80 mol%, or 45 to 75 mol%. Although the range of the neutralization degree may vary according to the final properties, if the neutralization degree is too high, neutralized monomers may be precipitated, and thus, it may be difficult to smoothly progress polymerization, and to the contrary, if the neutralization degree is too low, absorption property of polymer may be significantly lowered, and it may exhibit elastic rubber-like properties, which is difficult to handle.

As used herein, the term 'internal crosslinking agent' is used to distinguish from a surface crosslinking agent for crosslinking of the surface of base resin as described below, and it performs a function for crosslinking the unsaturated bonds of the above explained water soluble ethylenically unsaturated monomers to polymerize. In this step, crosslinking is progressed without division of the surface or inside, but by the surface crosslinking process of base resin as described below, the surface of the finally prepared superabsorbent polymer consists of a structure crosslinked by a surface crosslinking agent, and the inside consists of a structure crosslinked by the internal crosslinking agent.

As non-limiting examples of the internal crosslinking agent, multifunctional crosslinking agents such as N,N'-methylenebisacrylamide, trimethylolpropane tri(meth)acrylate, ethyleneglycol di(meth)acrylate, polyethyleneglycol (meth)acrylate, propyleneglycol di(meth)acrylate, polypropyleneglycol (meth)acrylate, butanediol di(meth)acrylate, butyleneglycol di(meth)acrylate, diethyleneglycol di(meth)acrylate, hexanediol di(meth)acrylate, triethyleneglycol di(meth)acrylate, tripropyleneglycol di(meth)acrylate, tetraethyleneglycol di(meth)acrylate, dipentaerythritol pentaacrylate, glycerin tri(meth)acrylate, pentaerythritol tetraacrylate, triarylamine, ethyleneglycol diglycidyl ether, propyleneglycol, glycerin, or ethylenecarbonate may be used alone or in combinations, but the internal crosslinking agent is not limited thereto.

The internal crosslinking agent may be used in the amount of 0.01 to 5 parts by weight, based on 100 parts by weight of the water soluble ethylenically unsaturated monomers. For example, the internal crosslinking agent may be used in the amount of 0.01 parts by weight or more, 0.05 parts by weight or more, 0.1 parts by weight, or 0.45 parts by weight or more, and 5 parts by weight or less, 3 parts by weight or less, 2 parts by weight or less, 1 part by weight or less, or 0.7 parts by weight or less, based on 100 parts by weight of the water soluble ethylenically unsaturated monomers. If the content of the internal crosslinking agent is too low, crosslinking may not sufficiently occur, and thus, it may be difficult to realize strength over an optimum level, and if the content of the internal crosslinking agent is too high, internal crosslinking density may increase, and thus, it may be difficult to realize desired centrifuge retention capacity.

And, in the monomer composition, a polymerization initiator commonly used in the preparation of superabsorbent polymer may be included. As the polymerization initiator, a thermal polymerization initiator or a photopolymeirzation initiator may be used according to polymerization method. However, even in the case of photopolymerization, since a certain amount of heat is generated by UV irradiation, etc., and heat is generated to some degree according to the progression of an exothermic polymerization reaction, a thermal polymerization initiator may be additionally included.

As the photopolymerization initiator, one or more compounds selected from the group consisting of benzoin ether, dialkyl acetophenone, hydroxyl alkylketone, phenyl glyoxylate, benzyl dimethyl Ketal, acyl phosphine, and α-aminoketone may be used. Among them, as specific examples of acyl phosphine, diphenyl(2,4,6-trimethylbenzoyl)phosphine oxide, phenylbis(2,4,6-trimethylbenzoyl)phosphine oxide, ethyl (2,4,6-trimethylbenzoyl)phenylphosphinate, and the like may be mentioned. More various photopolymerization initiators are described in Reinhold Schwalm, "UV Coatings: Basics, Recent Developments and New Application(Elsevier 2007)", page 115, and are not limited to the above described examples.

And, as the thermal polymerization initiator, one or more compounds selected from the group consisting of a persulfate initiator, an azo initiator, hydrogen peroxide, and ascorbic acid may be used. Specifically, as examples of the persulfate initiator, sodium persulfate (Na₂S₂O₈), potassium persulfate (K₂S₂O₈), ammonium persulfate ((NH₄)₂S₂O₈), and the like may be mentioned. And, as examples of the azo initiator, 2,2-azobis(2-amidinopropane)dihydrochloride, 2,2-azobis-(N,N-dimethylene)isobutyramidinedihydrochloride, 2-(carbamoylazo)isobutyronitril, 2,2-azobis[2-(2-imidazolin-2-yl)propane]dihydrochloride, 4,4-azobis-(4-cyanovalericacid), and the like may be mentioned. More various thermal initiators are described in "Principle of Polymerization (Wiley, 1981)", Odian, page 203, and it may be referred to.

Such a polymerization initiator may be added at the concentration of 0.001 to 1 part by weight, based on 100 parts by weight the water soluble ethylenically unsaturated monomers. Specifically, if the concentration of the polymerization initiator is too low, polymerization speed may become slow, and remaining monomers may be extracted in a large quantity in the final product. And, if the concentration of the polymerization initiator is too high, polymer chains making up the network of superabsorbent polymer may become short, and thus, water soluble content may increase, and absorbency under pressure of superabsorbent polymer may be lowered, thereby deteriorating the properties of polymer.

In addition, the monomer composition may further comprise additives such as a thickener, a plasticizer, a preservation stabilizer, an antioxidant, and the like, as necessary.

And, a foaming agent causes foaming during polymerization to form pores in hydrogel polymer, thereby increasing the surface area. As the foaming agent, carbonate may be used, and for example, sodium bicarbonate, sodium carbonate, potassium bicarbonate, potassium carbonate, calcium bicarbonate, calcium carbonate, magnesium bicarbonate or magnesium carbonate may be used.

As commercial foaming agent that can be used, an encapsulated foaming agent F-36D may be used, but is not limited thereto.

And, it is preferable that the foaming agent is used in the content of 1500 ppmw or less, based on the weight of the water soluble ethylenically unsaturated monomers. If the amount of the foaming agent used is greater than 1500 ppmw, pores may excessively increase, and thus, gel strength of superabsorbent polymer may be lowered and density may decrease, thus causing distribution and storage problems. And, it is preferable that the foaming agent is used in the amount of 500 ppmw or more, or 1000 ppmw or more, based on the weight of the water soluble ethylenically unsaturated monomers.

And, a surfactant induces uniform dispersion of the foaming agent, thus preventing decrease in gel strength and density due to uniform foaming. As the surfactant, an anionic surfactant may be preferably used. Specifically, surfactant comprising SO₃⁻ anion, represented by the following Chemical Formula 3 may be used.

[Chemical Formula 3] R-SO₃Na

In the Chemical Formula 3,
R is C8 to 16 alkyl.

And, it is preferable that the surfactant is used in the amount of 300 ppmw or less, based on the weight of the water soluble ethylenically unsaturated monomers. If the amount of the surfactant is greater than 300 ppmw, the content of surfactant in superabsorbent polymer may increase, which is not preferable. And, it is preferable that the surfactant is used in the amount of 100 ppmw or more, or 150 ppmw or more, based on the weight of the water soluble ethylenically unsaturated monomers.

And, such a monomer composition may be prepared in the form of a solution in which the above explained raw materials including water soluble ethylenically unsaturated monomers, polymerization initiator, internal crosslinking agent, and the like, are dissolved in a solvent.

Wherein, a solvent that can be used is not limited as long as it can dissolve or disperse the above explained raw materials, and for example, one or more selected from water, ethanol, ethyleneglycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methylcellosolve acetate and N,N-dimethylacetamide, etc. may be used alone or in combination.

The formation of hydrogel polymer through the polymerization of the monomer composition may be conducted by common polymerization methods without specific limitation. As non-limiting examples, the polymerization method is largely classified into thermal polymerization and photopolymerization according to energy source, and thermal polymerization may be progressed in a reactor equipped with a stirring axis such as a kneader, and photopolymerization may be progressed in a reactor equipped with a movable conveyer belt.

For example, hydrogel polymer may be obtained by introducing the above-described monomer composition into a reactor equipped with a stirring axis such as a kneader, and supplying hot air or heating the reactor to progress thermal polymerization. Wherein, the hydrogel polymer discharged to the outlet of the reactor have a size of a few millimeters to a few centimeters according to the shape of the stirring axis equipped in the reactor. Specifically, the size of obtained hydrogel polymer may vary according to the concentration of the introduced monomer composition and the introduction speed, and the like, and commonly, hydrogel polymer with particle diameter of 2 to 50 mm may be obtained.

And, in case photopolymerization of the monomer composition is progressed in a reactor equipped with a movable conveyer belt as explained above, hydrogel polymer in the form of a sheet may be obtained. Wherein, the thickness of the sheet may vary according to the concentration of the introduced monomer composition and the introduction speed, and it is preferable that the thickness is controlled to 0.5 to 10 cm so that the entire sheet may be uniformly polymerized, and yet, a production speed may be secured.

The moisture content of hydrogel polymer thus obtained may be commonly 40 to 80 wt%. Throughout the specification, a "moisture content" is the content of moisture occupied based on the total weight of hydrogel polymer, and it means a value obtained by subtracting the weight of polymer of a dry state from the weight of hydrogel polymer. Specifically, it is defined as a value calculated by measuring the weight loss according to moisture evaporation in the polymer while raising the temperature of polymer through infrared heating to dry. Wherein, the temperature is raised from room temperature to about 180 °C and then maintained at 180 °C, and the total drying time is 20 minutes including a temperature raising step of 5 minutes.

### (Fine cutting step)

Next, the method comprises a step of mixing the hydrogel polymer with carboxylic acid-based additive, and then, finely cutting, to prepare a mixture comprising finely cut hydrogel polymer.

In case hydrogel polymer having strong cohesive force is mixed with the carboxylic acid additives of the invention and then finely cut, particles having desired particle diameter can be prepared without agglomeration between ground particles, and thus, additional grinding process after drying is unnecessary, and fine generation may be reduced. And, by conducting the subsequent drying process under specific conditions, excellent drying efficiency may be realized, and thus, even if dry amount increases, warping of a dried product may be effectively inhibited.

The carboxylic acid-based additive is one or more selected from carboxylic acid represented by the Chemical Formula 1 and metal salts thereof:

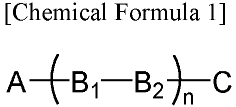

In the Chemical Formula 1,
A is C5 to 21 alkyl,
B₁ is -OCO-, -COO-, or -COOCH(R₁)COO-,
B₂ is -CH₂-, -CH₂CH₂-, -CH(R₂)-, -CH=CH-, or -C≡C-,
wherein, R₁ and R₂ are each independently, C1 to 4 alkyl, and
n is an integer of 1 to 3, and
C is a carboxylic group.

Specifically, the carboxylic acid-based additive is one or more selected from the group consisting of carboxylic acid represented by the Chemical Formula 1, alkali metal salts of carboxylic acid represented by the Chemical Formula 1, and alkali earth metal salts of carboxylic acid represented by the Chemical Formula 1. More specifically, the carboxylic acid-based additive is one of carboxylic acid represented by the Chemical Formula 1, alkali metal salts of carboxylic acid represented by the Chemical Formula 1, and alkali earth metal salts of carboxylic acid represented by the Chemical Formula 1.

In the Chemical Formula 1, A is a hydrophobic part, and may be a C5 to 21 linear or branched alkyl group, but in case A is a linear alkyl group, agglomeration between ground particles is inhibited and dispersibility is improved, and thus, A is preferably a linear alkyl group. In case A is an alkyl group having a carbon number less than 5, due to the short chain length, agglomeration between ground particles may not be effectively controlled, and if A is an alkyl group having a carbon number greater than 21, mobility of the additive may decrease, and thus, the additive may not be effectively mixed with hydrogel polymer, and due to cost increase of the additive, the unit cost of the composition may increase.

Specifically, in the Chemical Formula 1, A may be a C5 to 21 linear alkyl group, namely, n-pentyl, n-hexyl, n-heptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, n-octadecanyl, n-nonadecanyl, n-eicosanyl, or n-heneicosanyl.

More specifically, it may be C6 to 18 linear alky. For example, A may be -C₆H₁₃, - C₁₁H₂₃, -C₁₂H₂₅, -C₁₇H₃₅, or -C₁₈H₃₇.

And, in the Chemical Formula 1, the (B₁-B₂) part performs a function for improving adsorption capacity to the surface of polymer, which may be insufficient only with the C part, and in case the carbon number of B₂ is 3 or more, a distance between the B₁ part and C part may increase, and thus, adsorption capacity to hydrogel polymer may be lowered.

Wherein, R₁ and R₂ may be each independently, linear or branched C1 to 4 alkyl, and more specifically, R₁ and R₂ may be each independently, methyl, ethyl, propyl, isopropyl, butyl, isobutyl, sec-butyl, or tert-butyl, but since the additive is adsorbed to superabsorbent polymer particles, it is advantageous that the molecular structure of the additive is not bulky, and thus, both R₁ and R₂ may be methyl.

And, in the Chemical Formula 1, n may be 1, 2, or 3. More specifically, n meaning the number of (B₁-B₂), is preferably 1, considering that the (B₁-B₂) part is to reinforce adsorption capacity of the C part, and considering the molecular length for effective adsorption of the carboxylic acid-based additive to hydrogel polymer.

Specifically, in the Chemical Formula 1, B₁ may be 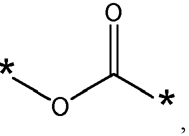 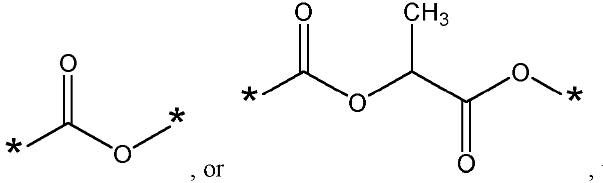 wherein, * is a binding site with neighboring atom.

For example, B₁ may be

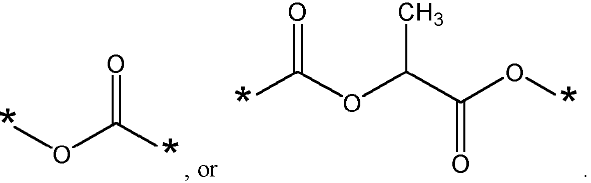

And, in the Chemical Formula 1, B₂ may be, 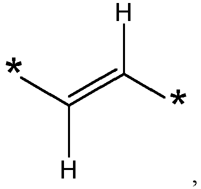 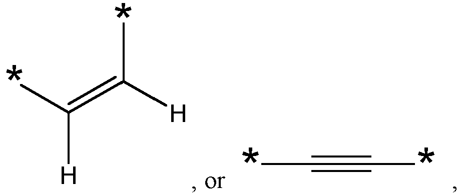 wherein * is a binding site with neighboring atom. Wherein, in order to improve adsorption capacity of the additive to crosslinked polymer together with the C part, B₂ may be preferably 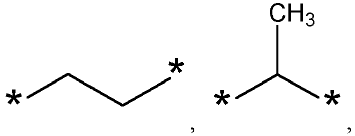 or

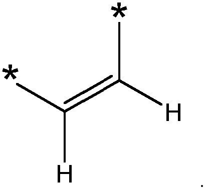

And, in the Chemical Formula 1, the C part is a hydrophilic part and is a carboxylic group(COOH), but in case the carboxylic acid-based additive is a salt, C is a carboxylate group(COO⁻).

That is to say, the carboxylic acid-based additive may be a compound represented by the following Chemical Formula 1a:

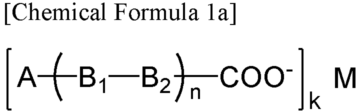

In the Chemical Formula 1a,
M is H⁺, monovalent cation of alkali metal, or divalent cation of alkali earth metal,
k is 1 when M is H⁺ or monovalent cation of alkali metal, and is 2 when M is divalent cation of alkali earth metal, and
A, B₁, B₂ and n are as defined in the Chemical Formula 1.

More specifically, in case the carboxylic acid-based additive is alkali metal salt of carboxylic acid represented by the Chemical Formula 1, the additive may be represented by the following Chemical Formula 1':

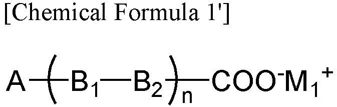

In the Chemical Formula 1',
M₁ is alkali metal, for example, sodium or potassium, and
A, B₁, B₂ and n are as defined in the Chemical Formula 1.

And, in case the carboxylic acid-based additive is alkali earth metal salt of carboxylic acid represented by the Chemical Formula 1, the additive may be represented by the following Chemical Formula 1":

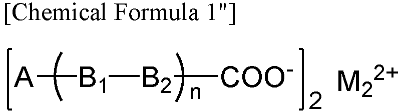

In the Chemical Formula 1", M₂ is alkali earth metal, for example, calcium, and
A, B₁, B₂ and n are as defined in the Chemical Formula 1.

For example, the carboxylic acid-based additive may be one carboxylic acid selected from the group consisting of the follow compounds:

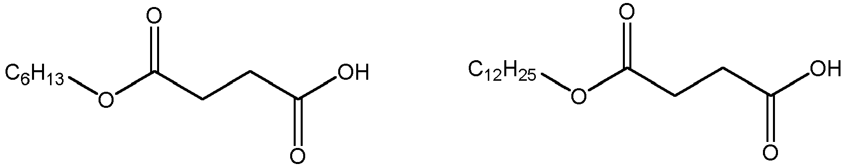

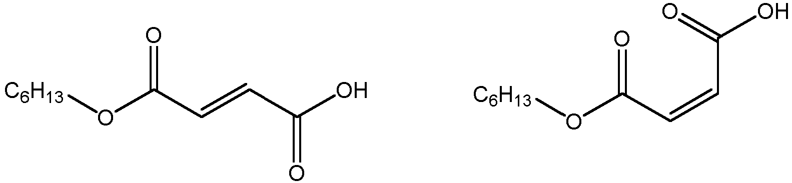

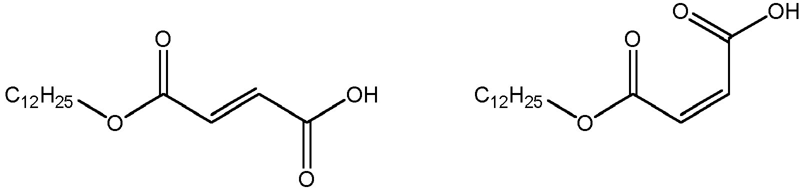

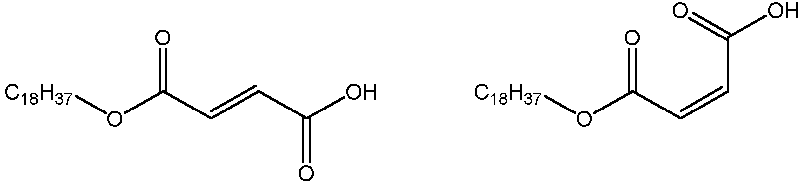

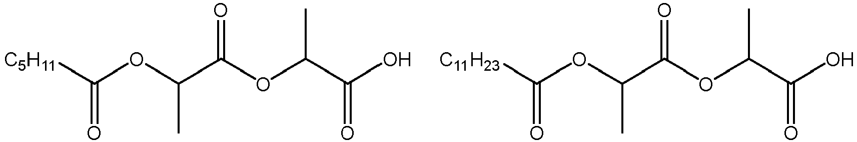

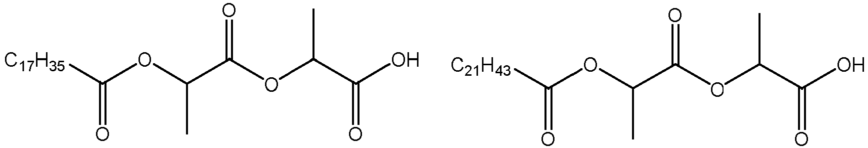

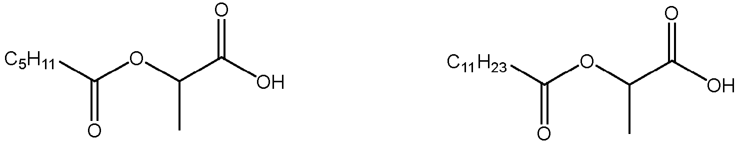

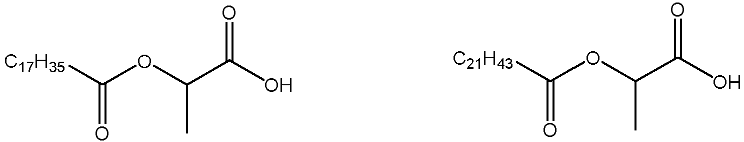

Alternatively, the carboxylic acid-based additive may be one alkali metal salt selected from the group consisting of the followings: 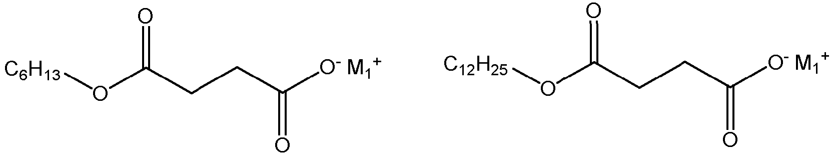 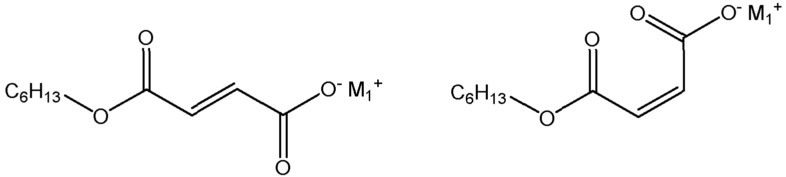 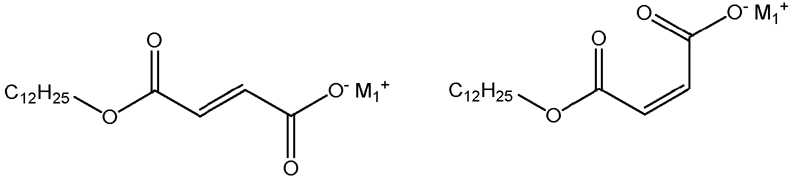 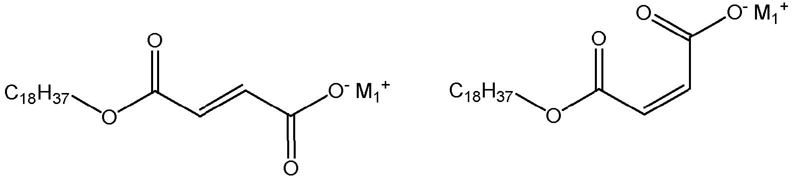 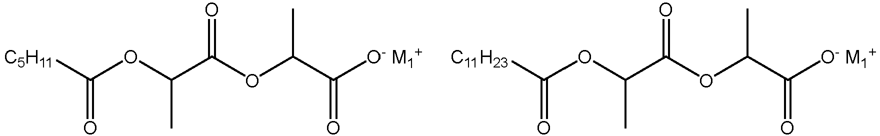 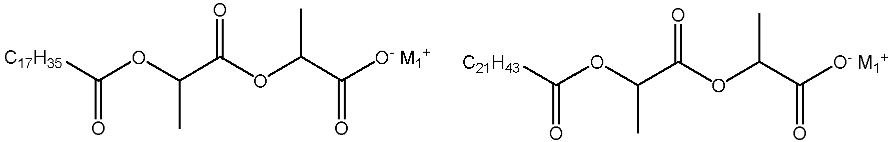 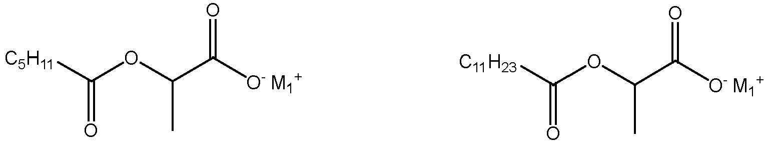 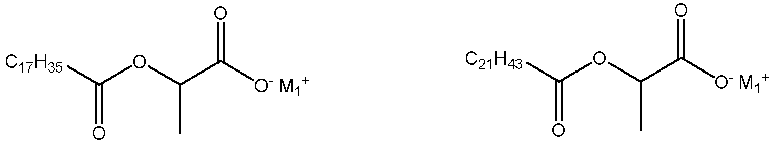 wherein,
M₁'s are each independently, alkali metal.

Alternatively, the carboxylic acid-based additive may be one alkali earth metal salt selected from the group consisting of the followings: 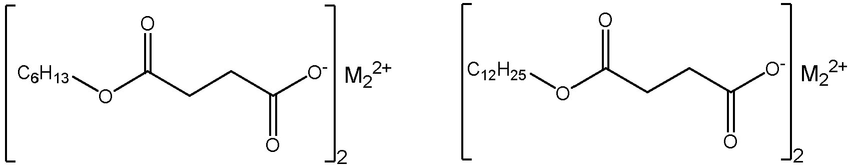 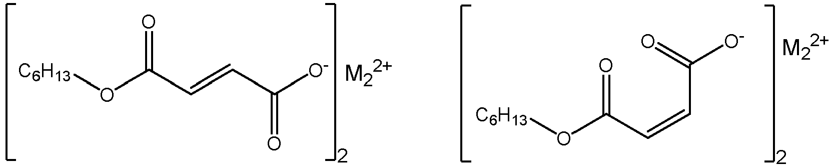 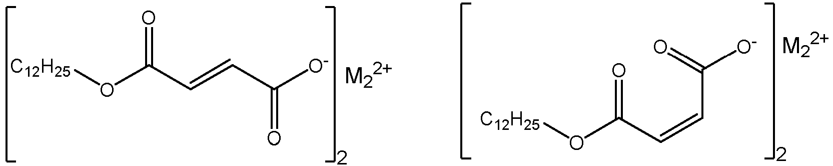 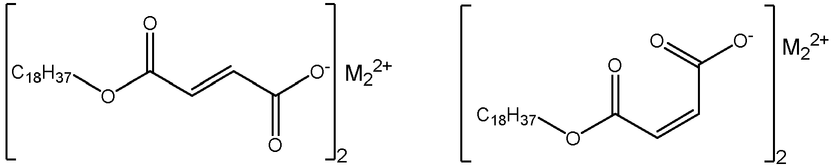 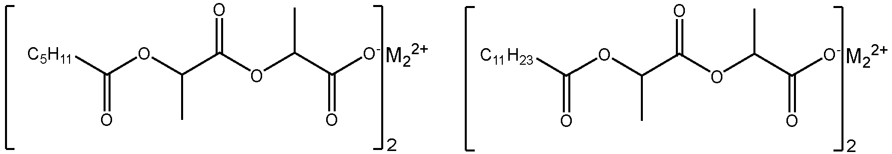 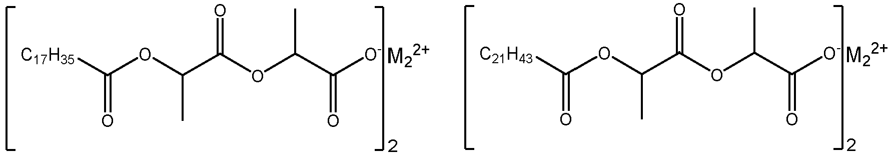 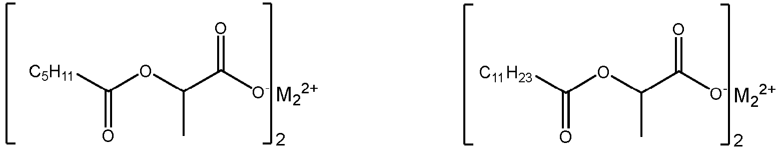 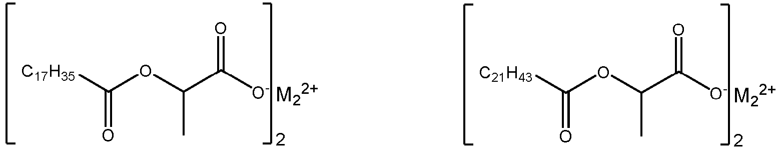 wherein,
M₂'s are each independently, alkali earth metal.

For example, the carboxylic acid-based additive may be one selected from compounds represented by the following Chemical Formulas 1-1 to 1-7, but are not limited thereto:

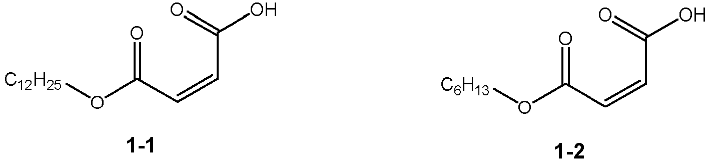

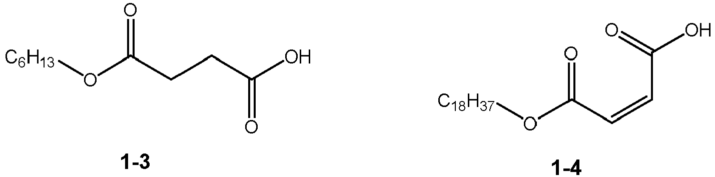

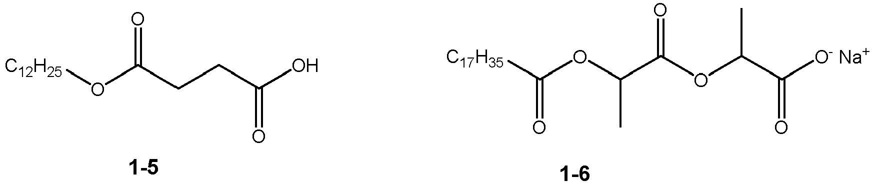

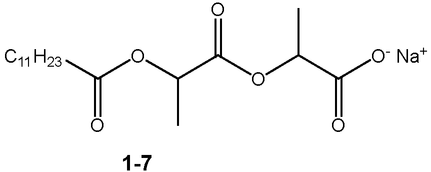

Meanwhile, in the base resin powder prepared by drying a finely cut mixture comprising the finely cut hydrogel polymer, besides the carboxylic acid-based additive, compounds formed by decomposition of the ester bond of B₁ while the additive is ground and dried together with hydrogel polymer may be further included.

Specifically, in case the additive is a compound wherein n is 1 and B₁ is -OCO-, the base resin powder may further comprise alcohol with a structure of A-OH and a compound with a structure of HOOC-B₂-C.

And, in case the additive is a compound wherein n is 1 and B₁ is -COO-, the base resin powder may further comprise carboxylic acid with a structure of A-COOH and a compound with a structure of HO-B₂-C.

And, in case the additive is a compound wherein n is 1 and B₁ is -COOCH(R₁)COO-, the base resin powder may further comprise carboxylic acid with a structure of A-COOH and a compound with a structure of HOCH(R₁)COO-B₂-C.

As such, when the base resin powder further comprise compounds formed by decomposition of an ester bond in the additive molecule, mobility of additives may increase, thereby further preventing reagglomeration after grinding.

Wherein, the carboxylic acid-based additive may be included in the content of 100 ppmw to 5,000 ppmw, based on the hydrogel polymer. Preferably, the additives may be included in the content of 500 ppmw to 4,500ppmw, or 1,000 ppmw to 4,000ppmw, 1,500 ppmw to 4,000ppmw or 3,000 ppmw to 4,000 ppmw. If the content of the additives is too low, agglomeration control effect of the additives may be insignificant, and thus, it may not be easy to grind to a desired particle diameter, and due to excessive kneading during the fine cutting process, water-soluble components may increase. If the content of the additives is too high, carboxylic acid-based additive may remain on the particle surface, and thus, surface tension may be lowered, and initial water absorption speed of superabsorbent polymer may decrease.

A method of mixing such carboxylic acid-based additive with hydrogel polymer is not specifically limited as long as it can uniformly mix it with the hydrogel polymer.

For example, the additives may be mixed in the form of a solution dissolved in water. Wherein, the solution and hydrogel polymer may be put in a reactor and mixed, or the hydrogel polymer may be put in a mixer and the solution may be sprayed, or the solution and hydrogel polymer may be continuously fed to a continuously operated mixer and mixed, and the like.

The step of coarsely grinding a mixture of the carboxylic acid-based additive and hydrogel polymer may be conducted in such a way that the hydrogel polymer is pushed to an outlet where holes having an average diameter of 1 mm to 5 mm are formed.

Specifically, a meat chopper may be used, and the meat chopper comprises a fine cutting module comprising a perforated plate having holes with an average diameter of 1 mm to 5 mm. Plural perforated plates may be used. The grinding is conducted by pushing hydrogel polymer mixed with the additives so that it may be ground while passing through the holes of the perforated plate. Wherein, in order to push the hydrogel polymer, an extruder may be used, and for example, a single or multi screw type extruder may be used. The fine cutting process may be conducted at the discharge speed of 50 Hz to 8,000 Hz.

Wherein, the average particle diameter(D50) of the finely cut hydrogel polymer is about 0.5 mm to 4 mm, and in case the hydrogel polymer is formed as particles having such a small particle diameter, commonly, due to high moisture content of the hydrogel polymer, the particles may be agglomerated with each other, but by using the carboxylic acid-based additive of the invention in combination, such a problem is not generated.

Meanwhile, throughout the specification, an average particle diameter "Dn" means a particle size or particle diameter at the n% point of particle number cumulative distribution according to particle size. Namely, D50 denotes a particle size at 50% point of particle number cumulative distribution according to particle size, D90 denotes a particle size at 90% point of particle number cumulative distribution according to particle size, and D10 denotes a particle size at 10% point of particle number cumulative distribution according to particle size. The Dn may be measured by a laser diffraction method. Specifically, powder to be measured is dispersed in a dispersion medium, and then, introduced in a commercial laser diffraction particle size measuring device (for example, Microtrac S3500), and when the particles passe through laser beam, difference in diffraction patterns according to particle size is measured to obtain particle size distribution. By calculating particle size at 10%, 50% and 90% points of particle number cumulative distribution according to particle size, D10, D50 and D90 may be measured.

Meanwhile, at least a part of the carboxylic acid-based additive included in the finely cut mixture may exist on the surface of the hydrogel polymer particles. The description "at least a part of the additive exists on the surface of hydrogel polymer" means that at least a part of the additive is adsorbed or bonded to the surface of the hydrogel polymer particles. This is because the carboxylic acid-based additive is not introduced during the polymerization process of the water soluble ethylenically unsaturated monomers, but are introduced after formation of polymer, and compared to the case wherein the additives are introduced during the polymerization process and the additive exists inside the polymer, reagglomeration between hydrogel polymer particles may be inhibited.

### (Drying step)

Next, the method comprises a step of drying the mixture comprising the finely cut hydrogel polymer while alternately introducing up-flow air of 120 °C to 210 °C and down-flow air of 120 °C to 210 °C to the mixture, to form base resin powder.

The up-flow air means introduction of hot air to a subject to be dried from the lower part to the upper part, and the down-flow air means introduction of hot air to a subject to be dried from the upper part to the lower part. Namely, the up-flow air and down-flow air means that the directions of hot air are opposite to each other. Although the angle of the direction may vary according to the conditions of hot air dryer used, commonly, angle difference between the progression directions of the up-flow air and down-flow air is 180°±5°.

In the drying, the introduction number of the up-flow air and down-flow air is not specifically limited, and they may be alternately introduced many times, as long as the introduction time of down-flow air is longer than that of up-flow air, based on each total introduction time. In case introduced may times, each total introduction time of up-flow air and down-flow air is calculated as a sum.

The drying is conducted by a fixed-bed type, which is a method of drying by passing hot air through material to be dried from bottom to top, while fixing the material on the floor such as a perforated plate through which air can flow. Specifically, it is conducted using an air permeable belt dryer equipped with a perforated plate. Specifically, it is progressed by introducing a finely cut mixture to be dried in the perforated plate, and thus, the up-flow air means introduction from the bottom of the perforated plate to the top, and the down-flow air means introduction from the top of the finely cut mixture placed on the perforated plate to the bottom.

Wherein, the total introduction time of the down-flow air is longer than that of the up-flow air, thereby achieving excellent drying efficiency and inhibiting warping of resin. Even if hydrogel polymer particles are formed in the previous fine cutting step, by the combined use of carboxylic acid-based additive, a subject to be dried is not agglomerated, and moreover, by introducing the down-flow air for a longer introduction time, warping of the edge of a subject to be dried may be effectively inhibited, and furthermore, even if the amount of a subject to be dried increases, an aimed degree of drying efficiency can be realized.

Meanwhile, in case the introduction time of the up-flow air is longer, warping of the edge may be generated, and particularly, inside may not be sufficiently dried, and thus, drying efficiency may be significantly lowered.

The temperature of hot air in the drying step is 120 °C to 210 °C, and if the temperature is less than 120 °C, it may be difficult to dry to the aimed degree, and if it is greater than 210 °C, degradation of polymer may be generated. Preferably, it may be conducted at 160 °C to 180 °C .

The total time of the drying step is not specifically limited as long as the introduction time of the down-flow air is longer than that of the up-flow air, but for example, it may be conducted for 10 minutes to 20 hours, preferably 30 minutes to 40 minutes. The above range is preferable because an aimed degree of drying efficiency can be realized.

The hot air drying is conducted by introducing hot air having a linear velocity of 0.5 m/s to 3.0 m/s, 0.7 m/s to 2.5 m/s, 0.85 m/s to 2.0 m/s. In case the above velocity range is met, even the inside of a subject to be dried may be uniformly dried. If the linear velocity is less than 0.5 m/s, hot air may not reach the inside of a subject to be dried, and if it is greater than 3.0 m/s, a subject to be dried may be scattered in a dryer.

Preferably, the total introduction time of the up-flow air may be 1% to 25%, based on the drying time, and in case, the introduction time of up-flow air is controlled within the above rage, even if hydrogel polymer particles are included in a large quantity, uniform and excellent drying efficiency can be realized without warping of the edge layer. Most preferably, the total introduction time of the up-flow air is 1% to 12%, based on the drying time.

Meanwhile, if the total introduction time of the up-flow air is less than 1%, uniformity of drying efficiency may be slightly deteriorated, and if it is greater than 25%, warping of a dried layer may not be effectively inhibited, and thus, drying efficiency may be lowered.

In one embodiment of the invention, the moisture content of base resin powder prepared through the drying process under the above conditions, is less than 8 wt%. The "moisture content" is the content of moisture occupied based on the weight of base resin powder to be measured, and it means a value calculated by subtracting the weight of dried polymer from the weight of base resin powder. Specifically, it is defined as a value calculated by measuring weight loss according to moisture evaporation in the base resin powder while raising the temperature of polymer through infrared heating to dry.

The moisture content is one of indicators of the degree of drying efficiency, and preferably, 0.01 wt% to 7 wt%, or 0.01 wt% to 5 wt%. The measurement method of the moisture content of the base resin powder will be explained in more detail in experimental examples later.

### (Grinding and classification step)

The preparation method according to one embodiment of the invention may further comprise, after the drying step, a step of grinding and classifying the dried base resin powder.

As explained above, since base resin powder obtained by drying a mixture having lowered cohesive force under specific conditions has remarkably low degree of reagglomeration between particles, base resin powder having desired particle diameter can be prepared by easily grinding even with low grinding energy. Namely, grinding steps may be reduced after the drying step (coarse grinding may be omitted and only fine grinding may be progressed), and base resin powder having desired particle diameter can be obtained through the process of classifying the ground product.

According to one embodiment of the invention, un-drying rate of the base resin powder prepared through the processes is less than 15%.

The un-drying rate represents the degree of dryness of Crum-shaped powders which are difficult to dry due to relatively large size among the base resin powders, and is one of indicators of drying efficiency.

Specifically, it means the mass fraction of powders that are not filtered by a sieve, after classifying the base resin powder for more than 10 minutes with a 4 mesh sieve according to ASTM 311, and the particles not filtered after classification with 4 mesh sieve for more than 10 minutes means those not sufficiently dried and reagglomerated due to the internal moisture. Indeed, the moisture content of powder not filtered by a sieve after classifying with a 4 mesh sieve for more than 10 minutes, is 10% or more.

The lower un-drying rate is more excellent, and thus, the lower limit of the un-drying rate is theoretically 0. Preferably, it is 0.1% to 13 %, 0.1% to 10 %, or 0.5% to 5 %. The measurement method of un-drying rate of the base resin powder will be explained in more detail in experimental examples later.

### (Surface crosslinking step)

Next, the preparation method of superabsorbent polymer according to one embodiment of the invention further comprises a step of heat treating the base resin powder in the presence of a surface crosslinking agent to surface crosslinking at least a part of the surface of the base resin powder, thus preparing superabsorbent polymer.

The surface crosslinking step induces a crosslinking reaction of the surface of the base resin powder in the presence of a surface crosslinking agent, and the unsaturated bonds of the water soluble ethylenically unsaturated monomers that are not crosslinked and remain on the surface are crosslinked by the surface crosslinking agent, thus forming superabsorbent polymer with increased surface crosslinking density.

Specifically, a surface crosslinked layer may be formed by heat treatment in the presence of a surface crosslinking agent, and the heat treatment process increases surface crosslinking density, namely external crosslinking density, but does not change internal crosslinking density, and thus, superabsorbent polymer having a surface crosslinked layer prepared has a structure wherein the crosslinking density of the outside is higher than inside.

In the surface crosslinking step, a surface crosslinking composition comprising an alcohol-based solvent and water, in addition to the surface crosslinking agent, may be used.

Meanwhile, as the surface crosslinking agent included in the surface crosslinking composition, those previously used for the preparation of superabsorbent polymer may be used without specific limitations. For example, the surface crosslinking agent may include one or more polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2,-methyl-2,4-pentanediol, tripropylene glycol and glycerol; one or more carbonate-based compounds selected from the group consisting of ethylene carbonate and propylene carbonate; epoxy compounds such as ethylene glycol diglycidyl ether, and the like; oxazoline compounds such as oxazolidinone, and the like; polyamine compounds; mono-, di- or polyoxazolidinone compounds; or cyclic urea compounds; and the like. Preferably, those identical to the above explained internal crosslinking agent may be used, and for example, alkylene glycol diglycidyl ether-based compounds such as ethylene glycol diglycidyl ether may be used.

Such a surface crosslinking agent may be used in the amount of 0.001 to 2 parts by weight, based on 100 parts by weight of the base resin powder. Preferably, it may be used in the amount of 0.005 parts by weight or more, 0.01 parts by weight or more, or 0.02 parts by weight or more, and 0.5 parts by weight or less, 0.3 parts by weight or less. By controlling the content of the surface crosslinking agent within the above range, superabsorbent polymer exhibiting excellent properties such as absorption performance and permeability can be prepared.

Meanwhile, the surface crosslinking agent is added to the base resin powder in the form of a surface crosslinking composition comprising the same, and a method for adding such a surface crosslinking composition is not specifically limited. For example, the surface crosslinking composition and base resin powder may be put in a reactor and mixed, or the surface crosslinking composition may be sprayed to the base resin powder, or the surface crosslinking composition and base resin powder may be continuously fed to a continuously operated mixer and mixed, and the like.

And, the surface crosslinking composition may further comprise water and/or hydrophilic organic solvent as a medium. Thereby, the surface crosslinking agent may be uniformly dispersed in the base resin powder. Wherein, the content of water and hydrophilic organic solvents may be controlled based on 100 parts by weight of the base resin powder, so as to induce uniform dissolution/dispersion of the surface crosslinking agent, prevent agglomeration of the base resin, and optimize the surface penetration depth of the surface crosslinking agent.

The surface crosslinking step may be progressed by heat treating at a temperature of 110 °C to 200 °C, or 110 °C to 150 °C for 30 minutes or more. More specifically, the surface crosslinking may be progressed by heat treating at the maximum reaction temperature explained above for 30 to 80 minutes, or 40 to 70 minutes.

By meeting these surface crosslinking process conditions (particularly, temperature rise condition and reaction at the maximum reaction temperature "), superabsorbent polymer meeting excellent properties such as permeability under load can be prepared.

A temperature rise means for the surface crosslinking is not specifically limited, and heat medium may be supplied or heat source may be directly supplied to heat. Wherein, as the heat medium that can be used, steam, hot air, temperature-raised fluid such as hot oil may be used, and the temperature of supplied heat medium may be appropriately selected considering the heat medium, temperature rise means and target temperature. Meanwhile, as the heat source directly supplied, electric heating or gas heating may be mentioned, but is not limited thereto.

Meanwhile, according to the preparation method of superabsorbent polymer of one embodiment of the invention, various multivalent metal salts such as aluminum salts such as aluminum sulfate may be further used during surface crosslinking, so as to further improve permeability, and the like. Such multivalent metal salts may be included in the surface crosslinked layer of the finally prepared superabsorbent polymer.

Meanwhile, superabsorbent polymer prepared according to one embodiment of the invention may have a particle diameter of 150 to 850 µm. More specifically, at least 95 wt% or more of the base resin powder and superabsorbent polymer comprising the same have a particle diameter of 150 to 850 µm, and particles having a particle diameter of 300 to 600 µm may be included in the content of 50 wt% or more, and particles having a particle diameter less than 150 µm may be included in the content less than 3 wt%.

Superabsorbent polymer prepared according to the above explained preparation method of one embodiment has excellent properties, and yet, due to excellent drying efficiency, warping of the edge may be effectively inhibited, thereby improving the qualities of the final product.

Specifically, the superabsorbent polymer may have centrifuge retention capacity(CRC) according to EDENA method WSP 241.2 of 26 g/g or more, and preferably, 28 g/g or more, 30 g/g or more, and 50 g/g or less, 45 g/g or less, 40 g/g or less, 35 g/g or less. Specific measurement method of the centrifuge retention capacity will be explained in detail in experimental examples.

Specifically, the superabsorbent polymer may have absorbency under 2068 Pa (0.3 psi) pressure(AUP) according to EDANA method WSP 242.3, of 24 g/g or more, preferably, 26 g/g or more, 27 g/g or more, and 50 g/g or less, 40 g/g or less, 35 g/g or less, 30 g/g or less. Specific measurement method of the absorbency under pressure will be explained in detail in experimental examples.

Hereinafter, the actions and effects of the invention will be explained in detail through specific examples of the invention. However, these examples are presented only as the illustrations of the invention, and the scope of the right of the invention is not determined thereby.

### [Example]

### <Preparation of superabsorbent polymer>

### Example 1

### (Step 1)

In a 3L glass container equipped with a stirrer and thermometer, 100 g(1.388 mol) of acrylic acid, 0.001 g of polyethyleneglycol diacrylate(Mn= 508) and 0.24 g of ethylene glycol diglycidyl ether as internal crosslinking agents, 0.008 g of diphenyl(2,4,6-trimethylbenzoyl)phosphine oxide photopolymerization initiator, 0.125 g of sodium persulfate thermal polymerization initiator, 123.5 g of 32% caustic soda solution, 0.1 g of encapsulated foaming agent(F-36D), and 0.02 g of sodium dodecyl sulfate(SDS) aqueous solution were mixed with 66.0 g of water at room temperature(25±1 °C) to prepare a monomer composition having the total solid content of 42.0 wt% (neutralization degree of acrylic acid: 70 mol%).

And then, the monomer composition was fed on a conveyor belt having a width of 10 cm and length of 2 m and rotating at 50 cm/min, at the speed of 500 ~ 2000 mL/min. And, while feeding the monomer composition, UV was irradiated at the intensity of 10 mW/cm² to progress polymerization for 60 seconds, thus obtaining a hydrogel polymer sheet having a moisture content of 50 wt%.

### (Step 2)

Next, on the hydrogel polymer sheet obtained through the polymerization reaction, an aqueous solution comprising sodium stearoyl-2-lactylate(Almax-6900, Ilshin Wells) represented by the following Chemical Formula A-1 was applied (based on 100 parts by weight of the hydrogel polymer, 0.4 parts by weight of carboxylic acid-based additive) and mixed, and then, the hydrogel polymer sheet was finely cut using a meat chopper having a hole diameter of 3mm, thus preparing a mixture comprising finely cut hydrogel particles. The average particle diameter(D50) of the finely cut hydrogel particles is about 3.66mm. The moisture content of the hydrogel polymer included in the finely cut mixture was 46 wt%:

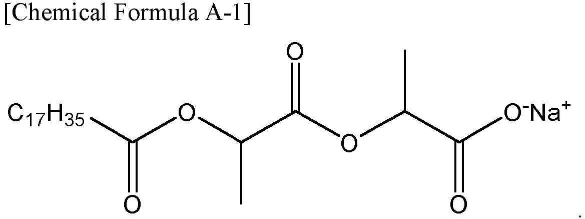

### (Step 3)

And then, 1,000g of the finely cut mixture was introduced in a belt dryer equipped with 200mm x 200mm x 1mm perforated plates, capable of transferring air volume up and down. At the top of the perforated plate, the finely cut mixture was positioned, and was dried by first introducing 160 °C up-flow air flowing from the lower part of the perforated plate to the upper part at the linear velocity of 0.93 m/s for 8 minutes 18 seconds, and then, introducing 160 °C down-flow air at 0.93 m/s for 24 minutes 42 seconds, thus preparing base resin powder.

### (Step 4)

Next, the base resin powder was classified with ASTM standard sieve to obtain base resin powder having a particle size of 150 to 850 µm.

Specifically, 100 parts by weight of the base resin powder was mixed with a surface crosslinking composition (4.8 parts by weight of water, 5.0 parts by weight of methanol, 0.03 parts by weight of ethyleneglycol diglycidyl ether, 0.01 parts by weight of silica Aerosil200), and a surface crosslinking reaction was progressed at 140 °C for 30 minutes. After the surface crosslinking, superabsorbent polymer was classified with ASTM standard sieve so that it has a particle diameter of 150µm to 850µm.

### Examples 2 to 6 and Comparative Examples 1 to 5

Superabsorbent polymer comprising base resin powders were prepared by the same method as Example 1, except that the conditions of the fine cutting step and drying step were changed as described in the following Table 1.

**[Table 1]**

| | Fine cutting step | | | Drying step | | |
|---|---|---|---|---|---|---|
| | additives (kind/content*) | Chopper hole diameter(mm) | Average particle diameter (mm)** | Feed introduction amount (g) | Up-flow temperature/time (%) *** | Down-flow temperature/time (%) |
| Example 1 | A-1/4,000 | 3 | 3.66 | 1,000 | 160/25 | 160/75 |
| Example 2 | A-1/4,000 | 3 | 3.68 | 1,000 | 160/17 | 160/83 |
| Example 3 | A-1/4,000 | 3 | 3.71 | 1,000 | 160/12 | 160/92 |
| Example 4 | A-1/4,000 | 3 | 3.65 | 1,000 | 160/8 | 160/100 |
| Example 5 | A-1/4,000 | 3 | 3.67 | 1,200 | 160/8 | 160/92 |
| Example 6 | A-1/4,000 | 3 | 3.58 | 1,300 | 160/8 | 160/92 |
| Comparative Example 1 | - | 16 | 7.98 | 1,000 | 160/33 | 160/67 |
| Comparative Example 2 | - | 16 | 8.24 | 1,300 | 160/33 | 160/67 |
| Comparative Example 3 | - | 16 | 7.77 | 1,500 | 160/33 | 160/67 |
| Comparative Example 4 | - | 8 | 7.50 | 1,000 | 160/33 | 160/67 |
| Comparative Example 5 | A-1/4,000 | 3 | 3.56 | 1,000 | 160/50 | 160/50 |
| Comparative Example 6 | A-1/4,000 | 3 | 3.51 | 800 | 160/50 | 160/50 |
| *content of additives: ppmw based on the weight of hydrogel polymer | | | | | | |
| ** means average particle diameter(D60) of hydrogel polymer after fine cutting and before drying | | | | | | |
| ***times of up-flow air and down-flow air respectively mean the rate based on the total drying time | | | | | | |

### <Experimental Example 1: Evaluation of base resin powder>

For the base resin powders prepared in Examples and Comparative Examples, the properties were evaluated as follows, and the results were shown in Table 2.

### (1) Evaluation of un-drying rate

For the base resin powders after drying and before surface crosslinking, prepared in Examples and Comparative Examples, the base resin powder sample(A1) was classified with ASTM E11 4 mesh sieve for 10 minutes, the powder sample(A2) not filtered by the sieve was obtained, and the rate of the weight A'2(g) of powder sample not filtered by the sieve to the initial weight A'1(g) of the base resin powder sample(A1) was measured. $Un - drying rate \left(wt%\right) = \left\{\left[A′2\left(g\right)\right]/A′1\left(g\right)\right\} * 100$

### (2) Evaluation of moisture content

For the base resin powders after drying and before surface crosslinking, prepared in Examples and Comparative Examples, a sample having a particle diameter of 150 to 850µm was taken among the base resin powders, and weight decrease according to moisture evaporation in the base resin powder sample while drying was measured.

Specifically, the initial weight H0(g) of the base resin powder sample was maintained at 180°C through infrared heating for 40 minutes, and then, the weight H1(g) was measured, and moisture content was calculated according to the following Mathematical Formula 2. $Moisture content \left(wt%\right) = \left\{\left[H0\left(g\right)-H1\left(g\right)\right]/H0\left(g\right)\right\} * 100$

### (3) Evaluation of warping

For the base resin powders after drying and before surface crosslinking, prepared in Examples and Comparative Examples, the degree of warping of dried products were evaluated according to the following evaluation standard, and the results were shown in the following Table 2. And, the photographs of the cross-sections of dried products were shown in Fig. 1. Fig. 1 (a) is the photograph of the cross-section of a dried product after drying in Example 2, and (b) is the photograph of the cross-section of a dried product after drying in Comparative Example 6.

### <Evaluation standard of warping>

∘: in case, based on the thickness of the central part of a dried product, 10% or more are lifted at the edge.
△: in case, based on the thickness of the central part of a dried product, 5% or more and less than 10% are lifted at the edge.
X: in case, based on the thickness of the central part of a dried product, less than 5% are lifted at the edge.

### <Experimental Example 2: Evaluation of superabsorbent polymer>

For the surface crosslinked superabsorbent polymers prepared in Examples and Comparative Examples, the properties were evaluated as follows, and the results were shown in Table 2.

Unless otherwise described, all the property evaluations were progressed under constant temperature constant humidity(23±1 °C, relative humidity 50±10%), and physiological saline or saline means 0.9 wt% sodium chloride(NaCl) aqueous solution.

### (1) Centrifuge Retention Capacity(CRC)

For each resin composition, centrifuge retention capacity by absorption rate under no load was measured according to European Disposables and Nonwovens Association (EDANA) standard EDANA WSP 241.3.

Specifically, each superabsorbent polymer obtained in Examples and Comparative Examples was classified with #30-50 sieves to obtain classified resin. The resin W₀(g) (about 0.2g) was uniformly put in an envelope made of non-woven fabric and the envelope was sealed, and then, it was immersed in physiological saline (0.9 wt%) at room temperature. After 30 minutes, the envelope was drained for 3 minutes at 250G using a centrifuge, and the weight W₂(g) of the envelope was measured. And, after the same operation without using resin, the weight W₁(g) at that time was measured.

Using obtained weights, CRC(g/g) was calculated according to the following Mathematical Formula 3. $CRC \left(g/g\right) = \left\{\left[{W}_{2}\left(g\right)-{W}_{1}\left(g\right)\right]/{W}_{0}\left(g\right)\right\} 1$

### (3) Absorbency under Pressure (AUP)

For each superabsorbent polymer of Examples and Comparative Examples, absorbency under 2068 Pa (0.3 psi) pressure was measured according to EDANA method WSP 242.3.

First, for measurement of absorbency under pressure, classified resin used for CRC measurement was used.

Specifically, on the bottom of a plastic cylinder having an inner diameter of 25 mm, a 400 mesh wire netting made of stainless steel was installed. Under room temperature and humidity of 50%, W₀(g) (0.16 g) of the superabsorbent polymer composition was uniformly sprayed on the wire netting, and piston having an outer diameter slightly smaller than 25 mm, capable of further applying 2068 Pa (0.3 psi) load, was put thereon such that there was no gap between the piston and the inner wall of the cylinder and up down movement was not hindered. At this time, the weight W₃(g) of the device was measured.

Inside a petri dish having a diameter of 150 mm, a glass filter having a diameter of 90 mm and a thickness of 5 mm was put, and physiological saline consisting of 0.9 wt% sodium chloride was poured to the same level as the upper surface of the glass filter. One piece of a filter paper having a diameter of 90 mm was put thereon. On the filter paper, the above measuring device was put, and the liquid was absorbed under load for 1 hour. After 1 hour, the measuring device was lifted, and the weight W₄(g) was measured.

Using obtained weights, absorbency under pressure(g/g) was calculated according to the following Mathematical Formula 4. $AUP \left(g/g\right) = \left[{W}_{4}\left(g\right)-{W}_{3}\left(g\right)\right] / {W}_{0} \left(g\right)$

**[Table 2]**

| | Base resin | | | superabsorbent polymer | |
|---|---|---|---|---|---|
| | Moisture content(%) | Un-drying rate(%) | Warping | CRC(g/g) | AUP(g/g) |
| Example 1 | 4.5 | 11 | △ | 30.1 | 28.2 |
| Example 2 | 3.9 | 3 | △ | 32.9 | 28.4 |
| Example 3 | 3.0 | 0 | X | 32.9 | 27.9 |
| Example 4 | 2.8 | 0 | X | 32.4 | 27.1 |
| Example 5 | 3.1 | 0 | X | 32.9 | 28.5 |
| Example 6 | 2.9 | 4 | X | 32.6 | 27.8 |
| Comparative Example 1 | 2.9 | 0 | O | 32.5 | 26.9 |
| Comparative Example 2 | 2.9 | 1 | O | 31.6 | 28.8 |
| Comparative Example 3 | 4.3 | 32 | O | 30.2 | 28.5 |
| Comparative Example 4 | 9.8 | 35 | O | 29.9 | 29.2 |
| Comparative Example 5 | 11.6 | 52 | O | 29.1 | 28.6 |
| Comparative Example 6 | 6.0 | 14 | O | 30.4 | 29.2 |

As confirmed in the data of the Table 2, in Examples according to the preparation method of the invention, by introducing specific additives during fine cutting of hydrogel polymer and controlling drying process conditions, agglomeration of hydrogel polymer is inhibited, and thus, base resin powder exhibits excellent drying efficiency, and even if dry amount increases in the drying process, warping of a dried product may be effectively inhibited. And, it was confirmed that superabsorbent polymer prepared thereby realizes excellent absorption properties.

Meanwhile, in case the additive of the invention is not used, due to reagglomeration of hydrogel particles, it is difficult to control the particle diameter range of particles, and in case hydrogel polymer is finely cut using a 3mm chopper in the same manner as Examples, the rate of reagglomeration of particles is high, and thus, the operation of the chopper is stopped, rendering it difficult to progress the experiment.

Accordingly, it was confirmed that, in Comparative Examples 1 to 3, the additive of the invention was not used and the finely cutting process was conducted using a 16mm chopper, and thus, it was difficult to inhibit warping of a dried product. And, it was confirmed that, in Comparative Examples 1 to 3, dry amount (feed introduction amount) was increased, and drying efficiency was rapidly lowered, compared to Examples 5 to 6 wherein dry amount was increased.

In Comparative Example 4, the additive of the invention was not used and fine cutting was conducted using a 8mm chopper, and thus, reagglomeration rate was high, and a large quantity of crumbs were formed during the drying process. Thus, it can be confirmed that CRC property of the finally prepared superabsorbent polymer is remarkably lowered compared to Examples.

In the case of Comparative Examples 5 and 6 wherein the additive of the invention was used but the drying process conditions of the invention were not met, drying efficiency was lowered, and warping of a dried product was generated. Thus, it can be seen that CRC property of the finally prepared superabsorbent polymer is remarkably lowered compared to Examples.

Meanwhile, some Comparative Examples realize CRC values similar to those of Examples due to the moisture content of the base resin, but in these cases, due to reagglomeration of hydrogel gel, it is difficult to control particle size, and drying efficiency is lowered as dry amount (feed introduction amount) increases.

## Claims

1. A method for preparing superabsorbent polymer comprising steps of:
conducting crosslinking polymerization of water soluble ethylenically unsaturated monomers having acid groups of which at least a part are neutralized, in the presence of an internal crosslinking agent and a polymerization initiator, to form a hydrogel polymer;
mixing a carboxylic acid-based additive with the hydrogel polymer, and then, finely cutting, to prepare a mixture comprising finely cut hydrogel polymer; and
drying the mixture while alternately introducing up-flow air of 120 °C to 210 °C and down-flow air of 120 °C to 210 °C to the mixture, to form base resin powder,
wherein the total introduction time of down-flow air is longer than the total introduction time of up-flow air,
wherein the carboxylic acid-based additive is one or more selected from the group consisting of carboxylic acid represented by the following Chemical Formula and salts thereof: 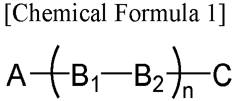
in the Chemical Formula 1,
A is C5 to 21 alkyl,
B₁ is -OCO-, -COO-, or -COOCH(R₁)COO-,
B₂ is -CH₂-, -CH₂CH₂-, -CH(R₂)-, -CH=CH-, or -C≡C-,
wherein, R₁ and R₂ are each independently, C1 to 4 alkyl, and
n is an integer of 1 to 3, and
C is a carboxylic group.

2. The method for preparing superabsorbent polymer according to claim 1, wherein the average particle diameter(D50) of the finely cut hydrogel polymer is 0.5 mm to 4 mm as measured by a laser diffraction method (according to the description).

3. The method for preparing superabsorbent polymer according to claim 1, wherein in the Chemical Formula 1, A is -C₆H₁₃, -C₁₁H₂₃, -C₁₂H₂₅, -C₁₇H₃₅, or -C₁₈H₃₇.

4. The method for preparing superabsorbent polymer according to claim 1, wherein in the Chemical Formula 1,
B₁ is 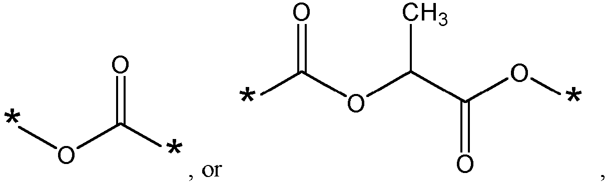
wherein, * is a binding site with neighboring atom.

5. The method for preparing superabsorbent polymer according to claim 1, wherein in the Chemical Formula 1,
B₂ is 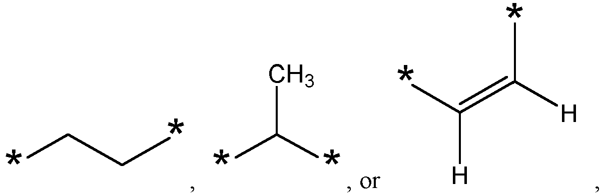
wherein, * is a binding site with neighboring atom.

6. The method for preparing superabsorbent polymer according to claim 1, wherein the carboxylic acid-based additive is one or more selected from carboxylic acid represented by the Chemical Formula 1, alkali metal salts thereof and alkali earth metal salts thereof.

7. The method for preparing superabsorbent polymer according to claim 1, wherein the carboxylic acid-based additive is one of compounds represented by the following Chemical Formulas 1-1 to 1-7:

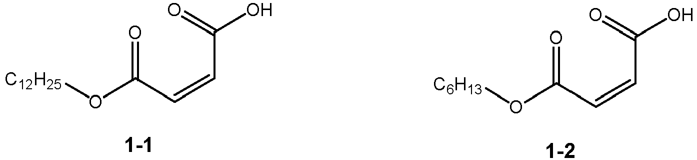

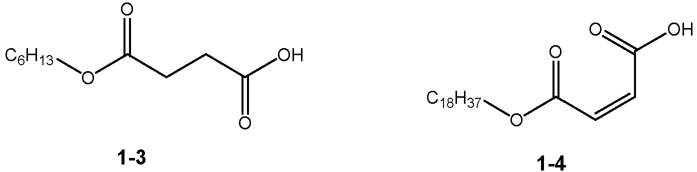

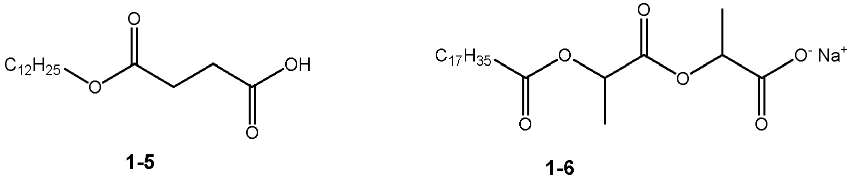

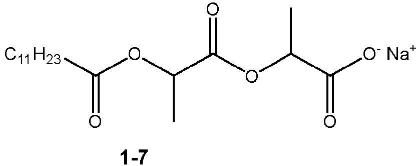

8. The method for preparing superabsorbent polymer according to claim 1, wherein the carboxylic acid-based additive is mixed in the amount of 100 ppmw to 5,000 ppmw, based on the hydrogel polymer.

9. The method for preparing superabsorbent polymer according to claim 1, wherein the drying is conducted with the total introduction time of up-flow air being 1 % to 25 % of the total drying time.

10. The method for preparing superabsorbent polymer according to claim 1, wherein the drying is conducted by a fixed-bed type.

11. The method for preparing superabsorbent polymer according to claim 1, wherein the fine cutting is conducted in such a way that the hydrogel polymer is pushed to an outlet where holes having an average diameter of 1mm to 5mm are formed.

12. The method for preparing superabsorbent polymer according to claim 1, wherein un-drying rate, defined by the mass fraction of powders that are not filtered by a sieve after classifying more than 10 minutes with a 4 mesh sieve according to ASTM E11, is less than 14wt%.

13. The method for preparing superabsorbent polymer according to claim 1, further comprising a step of grinding and classifying the base resin powder.

14. The method for preparing superabsorbent polymer according to claim 1 or claim 13, further comprising a step of heat treating the base resin powder to surface crosslink at least a part of the surface of the base resin powder, thus preparing superabsorbent polymer.

## Patentansprüche

1. Verfahren zur Herstellung eines superabsorbierenden Polymers, umfassend die Schritte:
Durchführen einer Vernetzungspolymerisation von wasserlöslichen ethylenisch ungesättigten Monomeren mit Säuregruppen, von denen mindestens ein Teil neutralisiert ist, in Gegenwart eines internen Vernetzungsmittels und eines Polymerisationsinitiators, um ein Hydrogelpolymer zu bilden;
Mischen eines Additivs auf Carbonsäurebasis mit dem Hydrogelpolymer und dann Feinschneiden, um eine Mischung herzustellen, die feingeschnittenes Hydrogelpolymer umfasst; und
Trocknen der Mischung, während abwechselnd Aufwärtsluft von 120 °C bis 210 °C und Abwärtsluft von 120 °C bis 210 °C in die Mischung eingeführt wird, um Basisharzpulver zu bilden,
wobei die Gesamteinführungszeit der Abwärtsluft länger ist als die Gesamteinführungszeit der Aufwärtsluft,
wobei das Additiv auf Carbonsäurebasis eines oder mehrere ist, ausgewählt aus der Gruppe bestehend aus Carbonsäure, dargestellt durch die folgende chemische Formel, und Salzen davon: 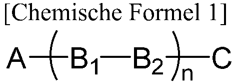
wobei in der chemischen Formel 1
A C5- bis C21-Alkyl ist,
B₁ -OCO-, -COO- oder -COOCH(R₁)COO- ist,
B₂ -CH₂-, -CH₂CH₂-, -CH(R₂)-, -CH=CH- oder -C=C- ist,
wobei R₁ und R₂ jeweils unabhängig C1- bis C4-Alkyl sind, und
n eine ganze Zahl von 1 bis 3 ist, und
C eine Carbonsäuregruppe ist.

2. Verfahren zur Herstellung eines superabsorbierenden Polymers nach Anspruch 1, wobei der durchschnittliche Teilchendurchmesser (D50) des feingeschnittenen Hydrogelpolymers 0,5 mm bis 4 mm beträgt, gemessen durch ein Laserbeugungsverfahren (gemäß der Beschreibung).

3. Verfahren zur Herstellung eines superabsorbierenden Polymers nach Anspruch 1, wobei in der chemischen Formel 1 A -C₆H₁₃, -C₁₁H₂₃, -C₁₂H₂₅, -C₁₇H₃₅ oder -C₁₈H₃₇ ist.

4. Verfahren zur Herstellung eines superabsorbierenden Polymers nach Anspruch 1, wobei in der chemischen Formel 1
B₁ 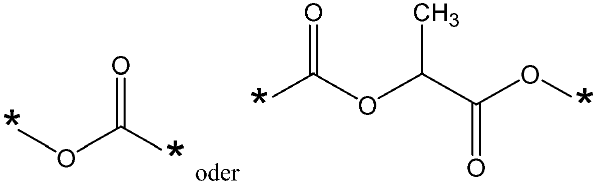 ist,
wobei * eine Bindungsstelle mit einem benachbarten Atom ist.

5. Verfahren zur Herstellung eines superabsorbierenden Polymers nach Anspruch 1, wobei in der chemischen Formel 1
B₂ 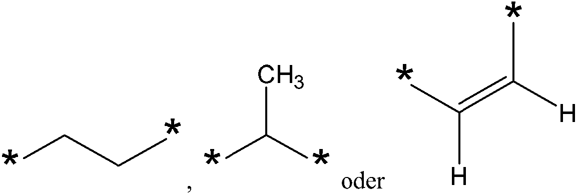 ist,
wobei * eine Bindungsstelle mit einem benachbarten Atom ist.

6. Verfahren zur Herstellung eines superabsorbierenden Polymers nach Anspruch 1, wobei das Additiv auf Carbonsäurebasis eines oder mehrere ist, ausgewählt aus Carbonsäure, dargestellt durch die chemische Formel 1, Alkalimetallsalzen davon und Erdalkalimetallsalzen davon.

7. Verfahren zur Herstellung eines superabsorbierenden Polymers nach Anspruch 1, wobei das Additiv auf Carbonsäurebasis eines von Verbindungen ist, dargestellt durch die folgenden chemischen Formeln 1-1 bis 1-7:

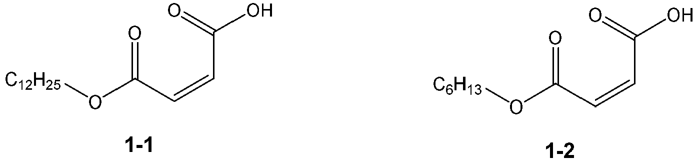

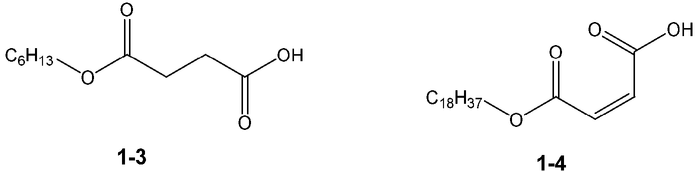

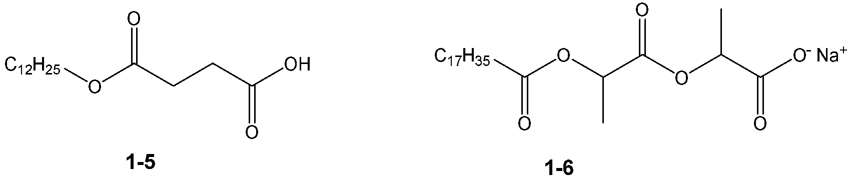

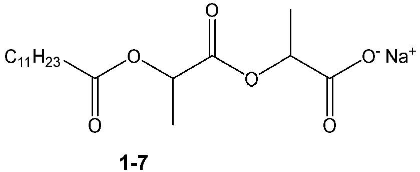

8. Verfahren zur Herstellung eines superabsorbierenden Polymers nach Anspruch 1, wobei das Additiv auf Carbonsäurebasis in der Menge von 100 ppmw bis 5.000 ppmw, bezogen auf das Hydrogelpolymer, gemischt wird.

9. Verfahren zur Herstellung eines superabsorbierenden Polymers nach Anspruch 1, wobei das Trocknen durchgeführt wird, wobei die Gesamteinführungszeit der Aufwärtsluft 1 % bis 25 % der Gesamttrocknungszeit beträgt.

10. Verfahren zur Herstellung eines superabsorbierenden Polymers nach Anspruch 1, wobei das Trocknen durch einen Festbetttyp durchgeführt wird.

11. Verfahren zur Herstellung eines superabsorbierenden Polymers nach Anspruch 1, wobei das Feinschneiden derart durchgeführt wird, dass das Hydrogelpolymer zu einem Auslass geschoben wird, wo Löcher mit einem durchschnittlichen Durchmesser von 1 mm bis 5 mm gebildet sind.

12. Verfahren zur Herstellung eines superabsorbierenden Polymers nach Anspruch 1, wobei die Nichttrocknungsrate, die durch den Massenanteil von Pulvern definiert ist, die nach dem Klassieren mit einem 4-Mesh-Sieb gemäß ASTM E11 nach mehr als 10 Minuten nicht durch ein Sieb gefiltert werden, weniger als 14 Gew.-% beträgt.

13. Verfahren zur Herstellung eines superabsorbierenden Polymers nach Anspruch 1, ferner umfassend einen Schritt des Mahlens und Klassierens des Basisharzpulvers.

14. Verfahren zur Herstellung eines superabsorbierenden Polymers nach Anspruch 1 oder Anspruch 13, ferner umfassend einen Schritt des Wärmebehandelns des Basisharzpulvers, um mindestens einen Teil der Oberfläche des Basisharzpulvers oberflächenzuvernetzen, wodurch ein superabsorbierendes Polymer hergestellt wird.

## Revendications

1. Procédé de préparation d'un polymère superabsorbant comprenant les étapes consistant à :
effectuer une polymérisation de réticulation de monomères insaturés à base d'éthylène soluble dans l'eau ayant des groupes acides au moins partiellement neutralisés en présence d'un agent de réticulation interne et d'un initiateur de polymérisation, pour former un polymère hydrogel ;
mélanger un additif à base d'acide carboxylique avec le polymère hydrogel, puis, couper finement pour préparer un mélange comprenant le polymère hydrogel finement coupé ; et
sécher le mélange tout en introduisant en alternance un flux d'air ascendant de 120°C à 210°C et un flux d'air descendant de 120°C à 210°C dans le mélange, pour former une poudre de résine de base,
dans lequel la durée d'introduction totale d'un flux d'air descendant est plus longue que la durée d'introduction totale d'un flux d'air ascendant,
dans lequel l'additif à base d'acide carboxylique est un ou plusieurs éléments sélectionnés dans le groupe constitué d'un acide carboxylique représenté par la Formule chimique 1 ci-après et des sels de celui-ci : 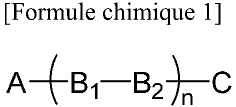
dans la Formule chimique 1,
A est un alkyle en C5 à 21,
B₁ est -OCO-, -COO- ou -COOCH(R₁)COO-,
B₂ est -CH₂-, -CH₂CH₂-, -CH(R₂)-, -CH=CH- ou -C=C-,
dans lequel, R₁ et R₂ sont chacun indépendamment un alkyle en C1 à 4, et
n est un nombre entier de 1 à 3, et
C est un groupe carboxyle.

2. Procédé de préparation d'un polymère superabsorbant selon la revendication 1, dans lequel le diamètre de particule moyen(D50) du polymère hydrogel finement coupé est 0,5 mm à 4 mm, mesuré par un procédé de diffraction laser (selon la description).

3. Procédé de préparation d'un polymère superabsorbant selon la revendication 1, dans lequel dans la Formule chimique 1, A est -C₆H₁₃, -C₁₁H₂₃, -C₁₂H₂₅, -C₁₇H₃₅ ou -C₁₈H₃₇.

4. Procédé de préparation d'un polymère superabsorbant selon la revendication 1, dans lequel dans la Formule chimique 1,
B₁ est 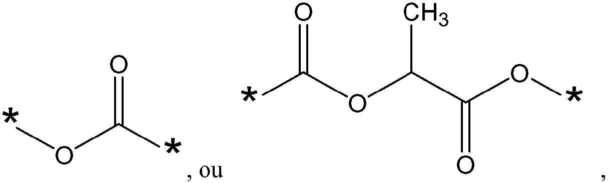
dans lequel, * est un site de liaison avec un atome voisin.

5. Procédé de préparation d'un polymère superabsorbant selon la revendication 1, dans lequel dans la Formule chimique 1,
B₂ est 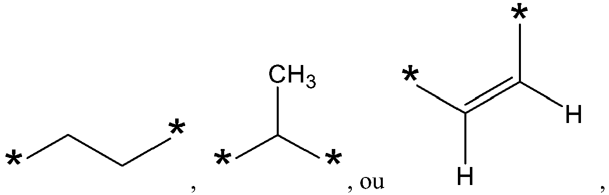
dans lequel, * est un site de liaison avec un atome voisin.

6. Procédé de préparation d'un polymère superabsorbant selon la revendication 1, dans lequel l'additif à base d'acide carboxylique est un ou plusieurs éléments sélectionnés dans le groupe constitué d'un acide carboxylique représenté par la Formule chimique 1, des sels de métal alcalin de celui-ci et des sels de métal alcalino-terreux de celui-ci.

7. Procédé de préparation d'un polymère superabsorbant selon la revendication 1, dans lequel l'additif à base d'acide carboxylique est l'un des composés représentés par les Formules chimiques 1-1 à 1-7 ci-après :

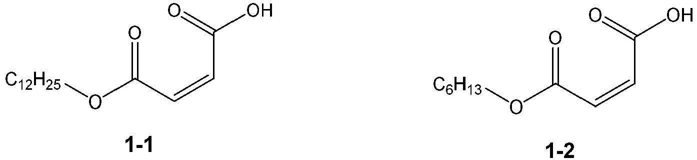

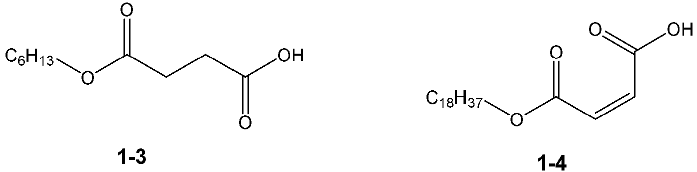

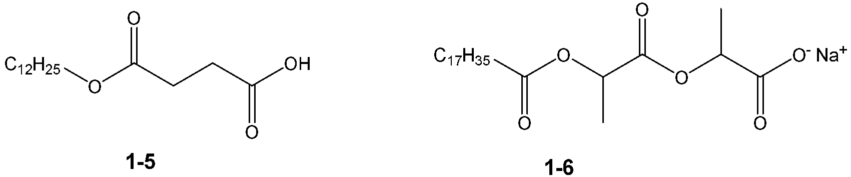

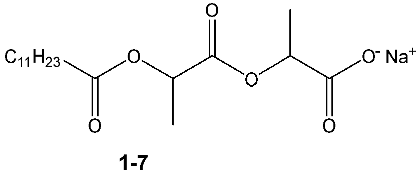

8. Procédé de préparation d'un polymère superabsorbant selon la revendication 1, dans lequel l'additif à base d'acide carboxylique est mélangé dans une quantité de 100 ppm en poids à 5000 ppm en poids, sur la base du polymère hydrogel.

9. Procédé de préparation d'un polymère superabsorbant selon la revendication 1, dans lequel le séchage est effectué avec la durée d'introduction totale d'un flux d'air ascendant étant 1 % à 25 % de la durée de séchage totale.

10. Procédé de préparation d'un polymère superabsorbant selon la revendication 1, dans lequel le séchage est effectué par un lit fixe.

11. Procédé de préparation d'un polymère superabsorbant selon la revendication 1, dans lequel la découpe fine est effectuée de telle façon que le polymère hydrogel est poussé vers une sortie où des trous ayant un diamètre moyen de 1 mm à 5 mm are formés.

12. Procédé de préparation d'un polymère superabsorbant selon la revendication 1, dans lequel le taux de non-séchage, défini par la fraction massique des poudres qui ne sont pas filtrées par un tamis après classement plus de 10 minutes avec un tamis à maille 4 selon ASTM E11, est inférieur à 14 % en poids.

13. Procédé de préparation d'un polymère superabsorbant selon la revendication 1, comprenant en outre une étape consistant à broyer et classer la poudre de résine de base.

14. Procédé de préparation d'un polymère superabsorbant selon la revendication 1 ou la revendication 13, comprenant en outre une étape consistant à traiter thermiquement la poudre de résine de base pour réticuler en surface au moins une partie de la surface de la poudre de résine de base, et ainsi préparer un polymère superabsorbant.
